# EUROPEAN PATENT SPECIFICATION

(11) **EP 0 136 221 B1**
(45) Date of publication and mention of the grant of the patent: **28.10.1987**
(21) Application number: 84401729.3
(22) Date of filing: 29.08.1984
(51) Int. Cl.: C08L 71/04, C08L 25/06, C08L 23/16, C08L 9/02, C08K 5/00

(54) **Polymer blends containing ionomeric rubbers and other ionomeric constituents**
Ionomere Kautschuke und andere ionomere Bestandteile enthaltende Polymermischungen
Mélanges de polymères contenant des caoutchoucs ionomériques et d'autres constituants ionomériques

(30) Priority: 11.06.1984 US 619431; 11.06.1984 US 619433; 31.08.1983 US 528188; 31.08.1983 US 528189
(43) Date of publication of application: 03.04.1985
(73) Proprietor: GENERAL ELECTRIC COMPANY, Schenectady New York 12305 (US)
(72) Inventor: Florence, Robert Allen, Scotia New York 12302 (US); Conroy, Paul Michael, Troy New York 12180 (US); Campbell, John Robert, Clifton Park New York 12065 (US)
(74) Representative: Catherine, Alain

## Description

This invention relates to aromatic resinous compositions having improved impact properties.

Aromatic polymers such as polycarbonates and polyphenylene oxides (also known as polyphenylene ethers) have found wide use as engineering resins. Their durability and strength has made them suitable for use in areas previously reserved for metals. The necessity for high performance in these areas requires continuing development in the direction of improving properties such as impact resistance and structural integrity.

An example of a resin system in which development is continuing is the polyphenylene oxide system. Polyphenylene oxides are normally combined with vinyl aromatic polymers such as polystyrenes for use as engineering resins. The impact resistance and ease of processing of polyphenylene oxide-polystyrene and similar systems has frequently been improved by the incorporation therein of a minor proportion of elastomeric groups such as those provided by an EPDM rubber, in combination with one or more plasticizers. It is sometimes found, however, that resinous compositions of this type undergo environmental stress-cracking during and after molding. They may also undergo delamination because of the limited compatibility of the constituents.

Polycarbonates are further examples of resin systems which are developing in this area. In general, polycarbonates derived from bisphenol A have relatively good impact properties. However, there is some tendency toward decreased impact strength with increased thickness of the parts molded therefrom. Also, it would be useful to improve the low-temperature ductility of said parts. On the other hand, polycarbonates derived from such compounds as 2,2',-6,6'-tetramethylbisphenol A are frequently deficient in impact properties and considerable improvement thereof is desired.

A principal object of the present invention, therefore, is to provide a new class of polymer blends.

A further object is to improve various properties of aromatic polymers, including impact resistance and tensile strength, without introducing other problems such as environmental stress-cracking and delamination.

A still further object is to provide novel polymer blends suitable for use as engineering resins, said blends having a high degree of compatibility and other desirable properties caused by high particle adhesion as a result of a novel mechanism of bonding.

In its broadest aspect, the present invention is directed to polymer compositions comprising:
(A) 50-85% by weight of at least one non-ionic aromatic polymer;
(B) 2-20% by weight of at least one elastomer containing highly polar ionic substituents, characterised in that it further comprises:
(C) 2-40% by weight of at least one substituted aromatic polymer, the substituents thereon being highly polar ionic substituents, based on the total weight of components A, B and C.

### Component A

Component A, the principal polymeric component of the compositions of this invention, is at least one non-ionic aromatic polymer. It may be an addition polymer, a condensation polymer, or a mixture thereof. Preferably, it comprises a major amount of condensation polymers, and it frequently consists entirely of condensation polymers.

As used herein, the term "aromatic" denotes a polymer in-which a substantial proportion of the mers (i.e., repeating monomer-derived units) contain an aromatic moiety, such as a benzene or naphthalene group. In general, at least about 40% by number of the mers, preferably at least about 90% and frequently 100%, contain an aromatic moiety. The term "non-ionic" denotes polymers free from highly ionic groups such as sulfonic acid, carboxylic acid, phosphorus acid or quaternary ammonium groups. The polymer may, however, contain moderately polar substituents such as halo, nitro, cyano, amino or the like.

Illustrative addition polymers useful as component A include homopolymers and copolymers of such ethylenically unsaturated aromatic compounds as styrene, chlorostyrenes, bromostyrenes, fluorostyrenes, methylstyrenes, ethylstyrenes, cyanostyrenes, vinyl naphthalene, divinylbenzene and allylbenzene. Most often, the addition polymer is a styrene homopolymer.

A wide variety of condensation polymers may be used as component A. They include phenol-aldehyde resins, epoxy resin, polyesters, polycarbonates, polyphenylene oxides, polyamides and polyimides. The preparation and structures of these polymers are well known in the art, and further discussion herein will be limited to the preferred subgenera; i.e. polyphenylene oxides, aromatic polycarbonates, aromatic polyimides, and aromatic polyesters substantially free from ethylenic unsaturation.

The polyphenylene oxides are a preferred subgenus of polymers useful as component A, since the present invention has been found extremely useful for preparing polyphenylene oxide compositions with improved impact resistance and structural integrity. As is well known in the art, polyphenylene oxides are prepared by the oxidative coupling of phenols, particularly those having the formula in Figure I, wherein R' is a lower primary alkyl group and R² is a lower primary or secondary alkyl group, the word "lower" meaning that it contains up to 7 carbon atoms. Examples of lower primary alkyl groups are methyl, ethyl, n-propyl, n-butyl, isobutyl, n-amyl, isoamyl, 2-methylbutyl, n-hexyl, 2,3-dimethylbutyl, 2-, 3- and 4-methylpentyl and the corresponding heptyl groups. Examples of lower secondary alkyl groups are isopropyl, sec-butyl and 2-pentyl. Preferably, R¹ and R² are straight chain rather than branched. Since the polyphenylene oxides in which R' and R² are other than methyl generally have no more desirable properties than those in which R' and R² are both methyl, and since 2,6-xylenol is the most readily available and cheapest 2,6-dialkylphenol, its use is preferred. The polyphenylene oxide obtained is then poly(2,6-dimethyl-1,4-phenylene oxide).

The polyphenylene oxides useful as component A include those containing substituents on the aromatic rings, as well as coupled polyphenylene oxides in which the coupling agent is reacted with the hydroxy groups of two polyphenylene oxide chains to increase the molecular weight of the polymer. Illustrative coupling agents are low molecular weight polycarbonates, quinones, heterocycles and formals. Polyphenylene oxides of these types are known in the art and are disclosed in a large number of patents, including the following US Patents:

Aromatic polycarbonates are also useful as component A. In general, they contain repeating units having the formula in Figure II, wherein A' is an aromatic radical. Illustrative A' radicals include those derived from bisphenol A, 2,2',6,6'-tetramethylbisphenol A and 1,1-dichloro-2,2-bis(4-hydroxyphenyl)ethylene. Typical polycarbonates prepared from these and other aromatic dihydroxy compounds are well known in the art as illustrated by the following US Patents:

The aromatic polyimides, another class of suitable aromatic polymers, are typically prepared by the reaction of a diamine (such as m-phenylenediamine, 4,4'-diaminodiphenyimethane or 4,4'-diaminodiphenyl ether) with a dianhydride. Typical dianhydrides are pyromellitic dianhydride, bis(3,4-dicarboxyphenyl)sulfone dianhydride, bis(3,4-dicarboxyphenyl) sulfide dianhydride and 2,2-bis[4-(3,4-dicarboxy- phenoxy)phenyl]propane dianhydride. Because of the ether groups present in the last-mentioned bisphenol A dianhydride, polyimides derived therefrom are normally designated "polyetherimides". Polyimides and polyetherimides are also known in the art as illustrated by the following US patents:

The aromatic polyesters useful as component A are those which are substantially free from ethylenic unsaturation. They are illustrated by poly(alkylene dicarboxylates), which normally comprise repeating units of the formula in Figure III, wherein R³ is a saturated divalent aliphatic or alicyclic hydrocarbon radical containing 2-10 and usually 2-6 carbon atoms and A is a divalent aromatic radical containing 6-20 carbon atoms. They are typically prepared by the reaction of at least one alkanediol such as ethylene glycol or 1,4-butanediol with at least one aromatic dicarboxylic acid such as isophthalic or terephthalic acid, or lower alkyl ester thereof. Such polyesters are known in the art as illustrated by the following US patents:

Also useful as component A are copolymers and other interpolymers. These include, for example, polycarbonates prepared from bisphenol mixtures; polyester-polycarbonates; graft polymers; block polymers containing polyphenylene oxide blocks in combination with polystyrene, polyformal or polycarbonate blocks; and the like. Such copolymers and other interpolymers are disclosed in various patents listed hereinabove.

Mixtures of the above-described polymers are also useful. They include mixtures of condensation polymers, of addition polymers, and of condensation with addition polymers. Examples are polycarbonate- polyester mixtures and polyphenylene oxide-vinyl aromatic polymer mixtures. The latter are preferred and are illustrated by the following US patents:

The most preferred mixtures of polyphenylene oxide and vinyl aromatic polymers are those which contain 35-90% by weight and especially 50-80% by weight polyphenylene oxide, by weight. The vinyl aromatic polymer is usually a styrene polymer and especially a homopolymer; such homopolymers are frequently designated "crystal polystyrene".

The average molecular weights (number average whenever used herein) of the polymers useful as component A will vary widely, depending in large part on the type of polymer used. In general, molecular weights from 5,000 to 500,000 are most suitable. For polyphenylene oxides and polystyrenes, the preferred molecular weight ranges are 5,000-40,000 and 50,000-250,000, respectively.

### Component B

Component B, the impact resistance-increasing ingredient in the compositions of this invention, is at least one elastomer containing highly polar ionic substituents; i.e., substituents with relatively high charge density. Said substituent and elastomer are hereinafter sometimes referred to as "ionomeric substituent" and "ionomeric elastomer", respectively.

The ionomeric substituents are acidic or strongly basic groups, most often acidic, or salts thereof. Examples are sulfonic or carboxylic acid (both of which are preferred), phosphorus acid and quaternary ammonium base groups and their salts which are stable at the processing temperatures of the compositions of this invention. Mixtures of any of the foregoing substituents are also suitable. Methods for their introduction into the elastomers, herein designated "ionomerization", are described hereinafter.

In general, it is preferred for at least part (typically at least about 35% and frequently all) of the ionomeric groups to be in the salt form. Examples of suitable acid salts are metal, ammonium, alkylammonium, phosphonium and alkylphosphonium. The metal salts, which are preferred, are illustrated by alkali metal, alkaline earth metal and zinc; sodium and zinc are especially preferred. Typical base salts are the chlorides, bromides, sulfates, sulfonates and phosphonates, the latter two may be either aliphatic or aromatic.

A characteristic property of the ionomeric elastomers is their "degree of ionomerization", which is defined as the mole percent of ionomeric groups based on mers in the polymer; in other words, as the number of ionomeric mers per 100 mers. The degree of ionomerization of component B which is preferred for the purposes of this invention is within the range of 0.1-10%, especially 0.25-5%.

The base elastomer for component B may be any elastomer known in the art. Examples thereof are provided in Encyclopedia of Polymer Science and Technology, Vol. 5, pp. 406―482 (1966).

A preferred subgenus of elastomers consists of those having a carbon atom backbone; that is, those in which the polymer chain consists entirely of carbon atoms. These are usually substantially free, and preferably entirely free, from aromatic moieties. They include natural rubber, synthetic diene rubbers such as polybutadiene and polyisoprene, butyl rubbers, polyisobutene rubbers, ethylene-propylene rubbers, ethylene-propylene-diene rubbers wherein the diene is non-conjugated (EPDM rubbers), chloroprene rubbers, and others known in the art. The molecular weights of said rubbers, before ionomerization, are typically 10,000-250,000 and most often 20,000-100,000.

The ionomerization of the above-described elastomers may be effected by known methods. For example, carboxylated rubbers are typically obtained by polymerization of a monomer mixture which includes an acid such as acrylic or methacrylic acid, or an ester thereof (e.g., ethyl acrylate, methyl methacrylate) in which the ester groups are subsequently hydrolyzed to free acid groups. A similar technique may be used for the preparation of sulfonated rubbers, using such monomers as 2-sulfoethyl methacrylate, sodium styrenesulfonate and 2-acrylamido-2-methylpropanesulfonic acid. Sulfonated carbon-backbone rubbers may also be prepared as disclosed in U.S. Patent 3,642,728. White phosphorus reacts with olefins in the presence of oxygen to yield phosphonic acids, and elastomeric phosphonate ionomers may be obtained by subjecting diene rubbers containing olefinic linkages to this reaction. Quaternary ammonium-ionomerized rubbers may be prepared by reacting a chlorinated derivative of a rubber, or a chloroprene rubber, with ammonia or an amine followed by quaternization.

Any of the foregoing acidic or basic substituents may be converted to their salts by known methods, typically by reaction with a base or acid, respectively.

A second subgenus of ionomeric elastomers consists of those having hetero backbones; i.e., containing more than one element in the polymer chain. These elements may include, for example, carbon, oxygen, nitrogen and silicon.

Illustrative polymers with hetero backbones include polyurethanes, polyethers and polysiloxanes, with the polysiloxanes being preferred. Typical ionomeric polysiloxane elastomers are represented by the formula in Figure IV, wherein each R⁴ is independently a lower alkyl radical and preferably methyl, X is an organic substituent containing an ionomeric moiety, and m and n are integers, with m being from 10n to 1000n and preferably from about 30n to 400n. For the purpose of determining degree of ionomerization, each parenthesized structure in the formula in Figure IV is considered a mer. The molecular weights of such polysiloxanes are generally 10,000-50,000.

The X value in the above formula is an organic radical which may contain ionomeric substituents such as any of those previously described. In a preferred embodiment, X is a zwitterionic radical, usually a sulfoalkyl-subtituted mono- or diaminoalkyl radical. The aminoalkyl radical is ordinarily lower aminoalkyl, and the sulfoalkyl substituents thereon normally contain 2-4 carbon atoms.

The preparation of typical zwitterionic polysiloxane elastomers is described by Graiver et al. in Journal of Polymer Science: Polymer Chemistry Edition, 17, 3559-3572 (1979), the disclosure of which is incorporated by reference herein, and may be effected by preparing a dimethylsiloxane-4,7-diazaheptyl- methylsiloxane copolymer and reacting it with 1,3-propanesultone. In the resulting polysiloxane, X may have the formula in Figure V, or, somewhat less preferably, one amino group may be unsubstituted.

The ionomeric polysiloxane elastomers, including the above-described zwitterionic elastomers, are normally derived from base polysiloxanes having molecular weights of 5000-150,000 and preferably 10,000-100,000. The preparation of such zwitterionic elastomers is illustrated by the following example.

### Example 1

A mixture of 700 grams (9.44 moles) of octamethylcyclotetrasiloxane, 29.2 grams (0.142 mole) of 4,7-diazoheptylmethyldimethoxysiloxane, 4.19 grams (0.0135 mole) of octamethyltrisiloxane and 0.544 gram (0.00972 mole) of potassium hydroxide was heated at 125-180°C with stirring for 20 hours. It was then cooled to 100°C, 2.5 grams of sodium bicarbonate was added and heating at that temperature was continued for 1 hour. The mixture was cooled, diluted with 1200 ml; of toluene and filtered using a filter aid material. The filtrate was washed twice with 300 ml of distilled water, concentrated to about 800 ml and diluted with toluene to 1.5 liters. 1,3-Propanesultone, 31.72 grams (0.492 mole), was added and the mixture was stirred at room temperature overnight, after which water and volatiles were removed by vacuum evaporation. The product was the desired zwitterionic polysiloxane elastomer having a number average molecular weight of about 30,000 and a degree of ionomerization of about 0.72%. It may be represented by the formula in Figure VI, wherein m is about 266n.

Illustrative ionomeric polyurethane and polyether elastomers may be prepared by the incorporation of N-methyldiethanolamine units in the polymer and quaternization of said units with 1,3-propanesultone, as described by Hwang et al. in Polymer Engineering and Science, 21,1027-1035 (1981), and by Yang et al. in Makromol, Chem., 184, 651-668 (1983). Also useful are the ionomers prepared by reacting 1,4-butanesultone with free secondary amine groups in polyurethanes derived from polyalkylene polyamines, as described in German Patent 922,736. The disclosures of the foregoing are incorporated by references herein.

The polysiloxane, polyurethane and polyether elastomers may also contain other ionomeric groups. For example, quaternary ammonium base-ionomerized polysiloxanes may be prepared by quaternizing the previously described amino-alkyl-substituted polysiloxanes.

The glass transition temperature (Tg) of the ionomeric elastomer should be quite low. It is generally no higher than -20°C and preferably below about -40°C.

It has previously been observed that elastomers having favorable tensile properties were effective for impact modification of various polymers. It has now been discovered, however, that the ionomeric polysiloxanes are useful as component B even though their tensile properties are not particularly favorable. In general, it appears that the impact properties of the compositions of this invention do not parallel the tensile properties of the ionomeric elastomer.

### Component C

In most cases, it has been found that mixtures of a major proportion of component A with a minor proportion of component B are subject to phase separation or delamination, sometimes referred to as "incompatibility". This problem is solved according to the present invention by incorporating a minor proportion of component C which is at least one substituted aromatic polymer, the substituents thereon being highly polar ionic substituents. Component C is typically prepared from an aromatic polymer of the type described hereinabove with reference to component A. Preferably, component C is an ionomeric derivative of component A, or, when component A is a mixture, of at least one constituent of said mixture. However, it is also within the scope of the invention to use as component C an ionomeric derivative of a polymer which is different from component A, provided said ionomeric derivative is effective in the manner described herein.

The highly polar ionic substituents on component C are, in general, the same ones described with reference to component B. Thus, they are typically sulfonic acid, carboxylic acid, phosphorus (e.g., phosphonic) acid or quaternary ammonium hydroxide groups and salts thereof, the salts are preferred. It is especially preferred that the substituents on components B and C be the same, and most preferably that they all be sulfonate or carboxylate substituents. However, it is also contemplated for example, for component B to contain carboxylate substituents and component C sulfonate substituents or vice versa. It is also contemplated for one component to have anionic and the other cationic substituents, whereupon they neutralize each other and no further salt formation is necessary.

lonomerization of the aromatic polymer to produce component C may be accomplished by methods known in the art. For example, the carboxylic and sulfonic acids or esters disclosed hereinabove with referemce to component B may be incorporated in a monomer mixture containing styrene or the like to form an ionomeric addition polymer. Sulfonate groups may also be incorporated in aromatic polymers by reaction with sulfonating agents such as sulfur trioxide or acetyl sulfate. Illustrative sulfonation methods are disclosed in U.S. Patent 3,870,841. Quaternary ammonium groups may be introduced by nitration followed by reduction and quaternization and phosphonic acid groups by nitration, reduction, formation of a diazonium salt, e.g., the fluoroborate), reaction of said salt with phosphorus trichloride and hydrolysis.

The preferred molecular weight ranges for the aromatic polymers which are ionomerized to produce component C are generally the same as those for component A. The degree of ionomerization of component C is typically 0.5-10% and most often 1-5%. For ionomerized polyphenylene oxides, a degree of ionomerization of 1-3% is frequently preferred since impact strengths are often maximized at that level.

While the present invention is not dependent on theory, it is believed that the improved properties afforded thereby are a result of polar interactions between the ionomeric groups in components B and C. These interactions, coupled with the compatibility of components A and C as result of their structural similarity by reason of the aromatic content thereof, constitute a novel mechanism of bonding which permits the incorporation of component B, the impact modifier, as a substantially stable disperse phase in component A. Such incorporation in turn minimizes delamination and similar types of physical failure.

The preparation of ionomeric polymers useful as component C in the compositions of this invention is illustrated by the following examples.

### Example 2

A solution of 76 ml. of acetic anhydride in 400 ml. of 1,2-dichloroethane was cooled to 10°C and 48.9 grams of 95% sulfuric acid was added dropwise over 20 minutes. A 300-ml portion of the resulting sulfonating agent was added dropwise at 50°C, over 10 minutes, to a stirred solution in three liters of . 1,2-dichloroethane of 625 grams of a poly(2,6-dimethyl-1,4-phenylene oxide) having a molecular weight of about 20,000 and an intrinsic viscosity in chloroform at 25°C of 0.48 dl/g. The mixture was stirred for 60 minutes, after which 200 ml of methanol and a solution of 65 grams of zinc acetate in 200 ml of water were added. The mixture was poured into an excess of methanol and the precipitated ionomer was removed by filtration and dried in a vacuum oven. There was obtained about 600 grams of the desired zinc salt of the sulfonated polyphenylene oxide; it contained 1.4% sulfur and had a degree of ionomerization of about 5.3%.

### Example 3

The procedure of Example 2 was repeated, except that the 1,2-dichloroethane and polyphenylene oxide were respectively replaced, on an equal weight basis, by methylene chloride and a styrene homopolymer having a molecular weight of about 106,000 and an intrinsic viscosity in toluene at 25°C of 0.80 dl/g, and the sulfonation was effected at reflux temperature. There was obtained about 600 grams of the desired zinc salt of the sulfonated polystyrene, it contained 1.3% sulfur and had a degree of ionomerization of about 4.2%.

### Component D

In a preferred embodiment of the invention, the compositions additionally comprise (D) at least one plasticizer, which facilitates molding and other working operations by lowering the melt viscosity of the composition.

A wide variety of plasticizers are suitable for use as component D. In general, they are polar materials melting at least 50°C below the processing temperature of the resinous components of the composition, for systems containing a substantial amount of polyphenylene oxide, the plasticizers should melt no higher than about 190°C. It is also preferred that their volatility be sufficiently low to permit their retention in the composition during processing.

Typical plasticizers include compounds containing at least one of oxygen, phosphorus and nitrogen atoms, and compounds releasing a small polar molecule such as water or methanol at elevated temperatures. In addition to serving as plasticizers, compounds containing phosphorus may act as flame retardant additives.

Examples of oxygen-containing materials are organic acids and their salts and esters such as stearic acid, lauric acid, calcium stearate, zinc laurate, zinc stearate, magnesium laurate, aluminum ricinoleate, dimethyl sebacate and dimethyl phthalate, and alcohols, phenols and ethers such as hexyl, alcohol, nonylphenol, resorcinol, banzyl alcohol and ethyl hexyl ether.

Illustrative phosphorus-containing compounds are triphenyl phosphate, tri-p-tolyl phosphate, tris(3,5-dimethylphenyl) phosphate, tributyl phosphate, triisopropyl-phosphate and tetraalkylphosphonium p-toluenesulfonate. Nitrogen-containing materials include stearamide, p-toluenesulfonamide, diphenylurea, diphenylquanidine, di-o-tolylquanidine, piperazine, aniline, dihexylamine, diphenylamine, phenyl-(3-naphthylamine and tetraalkylammonium p-toluenesulfonate.

Polar molecule-releasing materials include various hydrates of simple and mixed oxides and salts such as lithium sulfate dihydrate, ammonium cerium sulfate octahydrate, ammonium chromium (III) sulfate dodecahydrate, ferric ammonium sulfate dodecahydrate, barium oxide octahydrate, bismuth dioxide dihydrate and the like, and alcoholates such as calcium chloride tetramethanolate.

The preferred plasticizers, especially when component A is entirely or partially polyphenylene oxide, are triaryl phosphates and the metal (especially zinc) salts of fatty acids. In most instances a combination of the two is used, typically containing 40-70% by weight triaryl phosphate with the balance being metal salt.

### Component proportions

The amount of component B in the compositions of this invention may be any amount effective to provide the desired degree of impact resistance. The amount of component C is an amount effective to maintain component B as a substantially stable disperse phase in component A. While it is within the scope of the invention for component B to be soluble in the resin system, solubility is not necessary and is frequently unattainable.

In general, the compositions of the invention comprise 50-85% by weight of component A, 2-20% by weight of component B and 2-40% by weight of component C, based on total weight of the resinous components (i.e., of the combination of components A, B and C). It is generally found that compositions in which component B is a polysiloxane ionomer require less of component B and often more of component C than those in which component B has a carbon backbone. Most often, the compositions in which component B has a carbon backbone may advantageously contain 70-85% of weight of component A, 5-15% by weight of component B and 2-20% by weight of component C. On the other hand, when component B is polysiloxane-based the preferred proportions are 50-80% by weight of component A, 3-10% by weight of component B and 15-40% by weight of component C.

Component D, when present, is generally in the amount of 5-35 phr. (parts by weight per 100 parts of resinous components). In general, less plasticizer is required when component A consists entirely of condensation polymer than when it is a blend of condensation and addition polymers. In the former case the preferred plasticizer range is 5-15 phr., and in the latter case 20-35 phr.

While the presence of a plasticizer in the compositions of this invention may be desirable for the aforementioned purposes, the level thereof should generally be no higher than necessary since tensile strength tends to decrease with increasing plasticizer level. One advantage of using a zinc salt as component C, rather than a salt containing another cation such as sodium, is that it frequently enables one to use a lower level of plasticizer, thus increasing tensile strength.

### Details of preparation: Specific embodiments

The compositions of this invention are normally prepared by merely blending the ingredients thereof under conditions adapted for the formation of an intimate blend. Such conditions often include extrusion, typically at temperatures in the range of 100-300°C. Extrusion is typically effected in a screw-type or similar extruder which applies a substantial shearing force to the composition, thereby decreasing the particle size thereof.

One of the advantageous features of the present invention is a result of the effectiveness of component C to promote uniform particle size of component B and adhesion of the particles thereof to the continuous or external phase which comprises chiefly component A. An examination of the fracture surfaces of Izod impact bars with a scanning electron microscope shows that the elastomer particles therein are quite uniform in particle size, a major proportion of the particles thereof being in the 0.1-3.5 micrometer and most often in the 0.2-1.5 mcirometer range. These particles are uniformly dispersed in the polymer matrix and adhere well thereto, minimizing delamination. By contrast, blends from which component C is absent contain less uniform, poorly adhered elastomer particles.

In addition to the ingredients described in detail herein, the compositions of this invention can also contain other materials such as fillers, pigments, ultraviolet stabilizers, anti-static agents and mold release agents. Materials useful for these purposes, and the proportions useful in the compositions of this invention, will be apparent to those skilled in the art.

The preparation of the compositions of this invention is illustrated by the following examples. All parts and percentages except degree of ionomerization are by weight.

### Examples 4-6

In component A, the polyphenylene oxide was a poly-(2,6-dimethyl-1,4-phenylene oxide) having a molecular weight of about 20,000 and an intrinsic viscosity in chloroform at 25°C of 0.48 dl/g. The polystyrene was "Monsanto Lustrex HH-101@", a commercially available styrene homopolymer having a molecular weight of about 106,000 and an intrinsic viscosity in toluene at 25°C of 0.80 dl/g.

Component B was "Uniroyal )E-2590@", a commercially available zinc sulfonate derived from a sulfonated EPDM rubber having a molecular weight of about 50,000 and containing an average of 13 sulfonate groups per molecule, for a degree of ionomerization of about 0.86%. It has a Tg of about -60°C. The sulfonated polyphenylene oxide comprising component C was prepared according to the method of Example 2, varying the amount of sulfonating agent to afford the appropriate degree of ionomerization and neutralizing with zinc acetate.

The compositions were prepared by blending the appropriate proportions of ingredients, mixing in a jar mill for 2 hours and extruding on a twin screw extruder at about 160-270°C. The extruded material was quenched in water, pelletized and dried at 80°C. Test specimens were then prepared by injection molding and tested for Izod impact (ASTM procedure D256), compared with a control in which component C was absent. The fracture surfaces of the specimens after the Izod test were visually inspected for delamination, no substantial delamination was observed for Examples 4-6.

The compositional and test data for Examples 4-6 are listed in Table I.

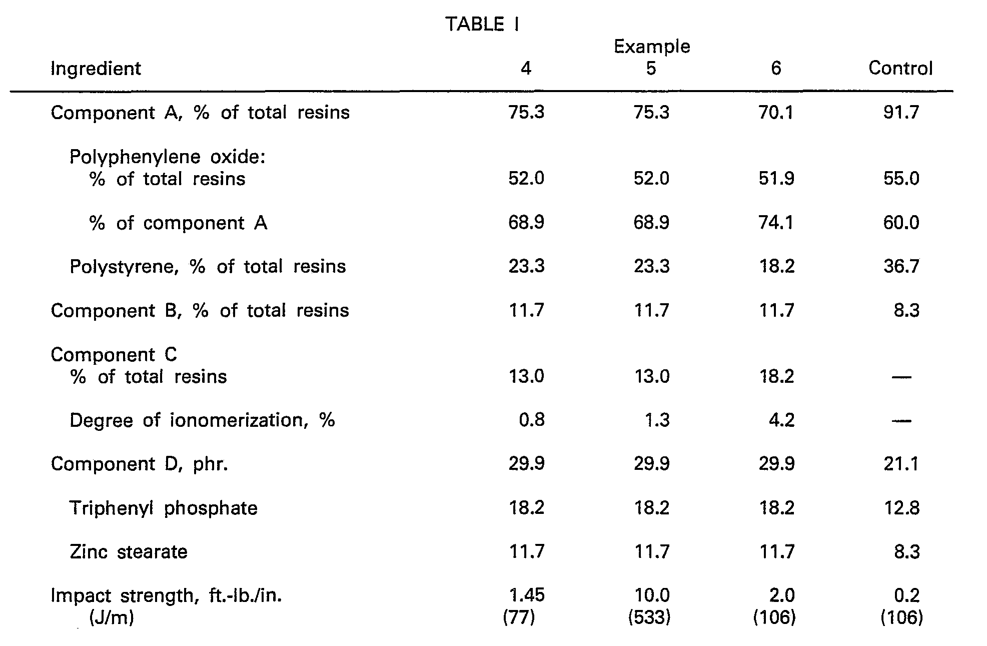

It is apparent from Table I that the compositions of this invention are superior in impact strength to compositions containing only components A and B. The superior impact strength of compositions in which component C has a degree of ionomerization within the 1-3% preferred range is also evident from a comparison of Example 5 with Examples 4 and 6.

### Examples 7-15

The constituents of component A were the same as in Examples 4-6. Component B was "Uniroyal IE-1025®", a commercially available zinc sulfonate similar to "Uniroyal IE-2590®" except that it contains an average of 5 sulfonate groups per molecule and has a degree of ionomerization of about 0.33%. The sulfonated polystyrene comprising component C was prepared according to the method of Example 3, varying the amount of sulfonating agent to afford the appropriate degree of ionomerization and neutralizing with zinc acetate or sodium hydroxide as appropriate.

The compositions were prepared as in Examples 4-6 and tested (in comparison with a control in which component C was absent) for Izod impact strength and, in some instances, for tensile strength (ASTM procedure D638. Type V specimen). No substantial delamination was observed for Example 7-15.

The compositional and test data for Examples 7-15 are listed in Table II.

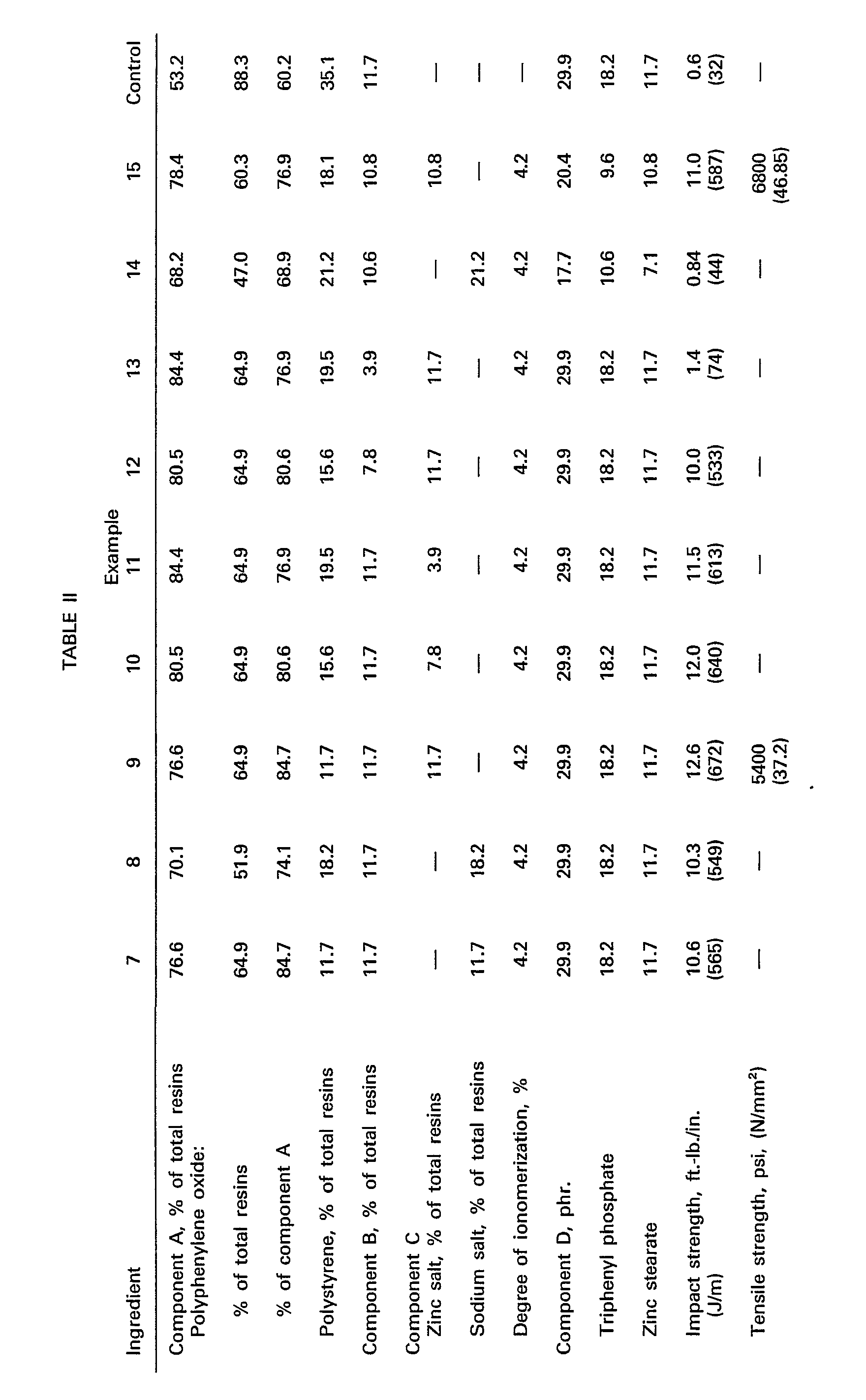

The results in Table II, like those in Table I, show the favorable impact strengths generally possessed by the compositions of this invention when compared to compositions not containing component C. They also indicate some trends resulting from changes in various parameters. Examples 9, 12 and 13, for instance, demonstrate the results of varying the level of component B in the compositions, and especially of decreasing said level below about 5%. Examples 7 and 9 show the superiority of zinc salts to sodium salts as component C with respect to impact strength, and Examples 9-11 show the relatively small effect of the level of zinc salt on impact strength. A comparison of Examples 8 and 14 on the one hand and Examples 9 and 15 on the other shows the superiority of zinc salts to sodium salts as component C with respect to plasticizer level and the effect thereof on impact strength. Finally, the effect of lower plasticizer levels, where possible, on tensile strength is apparent from a comparison of Examples 9 and 15.

### Examples 16-18

These examples are similar to Examples 4―6 except that component B was the ionomeric polysiloxane elastomer of Example 1. The method of making the compositions was the same as that used in Examples 4―6 except that the blend was homogenized in a Henschel mixer prior to extruding. The compositional and test data are given in Table III (in comparison with two controls as indicated). As with Examples 4-6, the compositions of Examples 16-18 showed substantially no delamination.

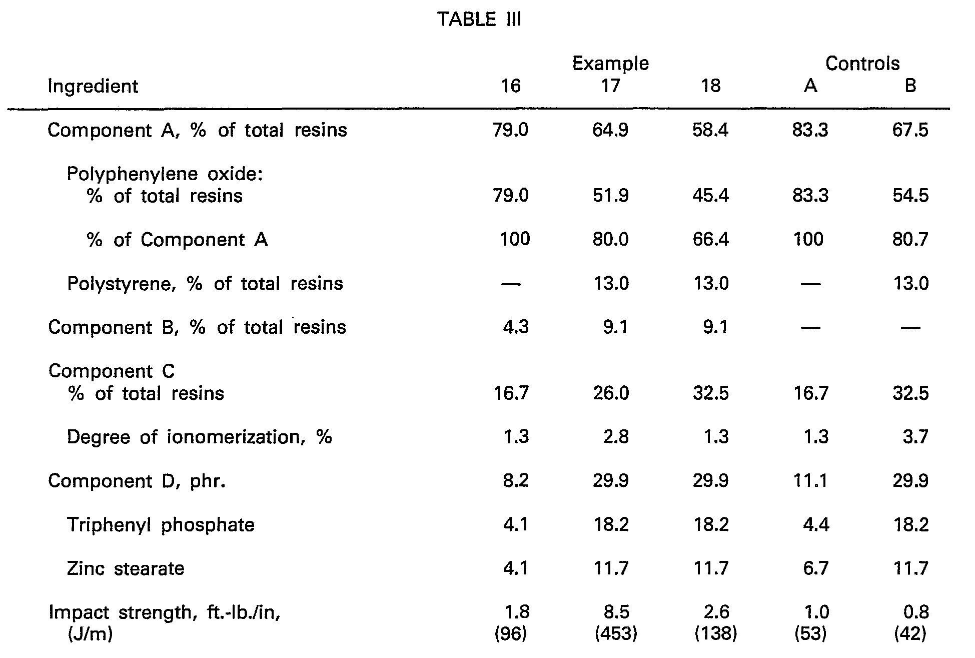

In addition to the demonstration in Table III of the utility of compositions in which component B is a polysiloxane elastomer. Examples 17 and 18 illustrate the favorable effect on impact strength of the use of a combination of polyphenylene oxide and polystyrene as component A, especially when said combination contains at least about 50% polyphenylene oxide.

### Examples 19-22

In component A, the polyphenylene oxide and polystyrene were those of Examples 4-6. Component B was prepared by preparing a methylene chloride solution of "Polysar Krynac 221@", a commercially available elastomeric terpolymer of 66.7 mole percent butadiene, 28.8 mole percent acrylonitrile and 4.5 mole percent acrylic acid having a degree of ionomerization of 4.5%; reacting the solution with 40 mole percent of a solution of sodium hydroxide in aqueous isopropanol; and vacuum stripping the solvents. The resins used as component C were the zinc salt of a sulfonated polystyrene similar to that of Example 3 and a styrene-sodium acrylate copolymer containing 7.1 mole percent sodium acrylate units (and thus having a degree of ionomerization of 7.1%) and prepared by neutralization of a commercially available styrene-acrylic acid copolymer.

The compositions were prepared by blending the appropriate proportions of ingredients, mixing in a jar mill for one hour and extruding on a twin screw extruder at about 160―280°C. The extruded material was quenched in water, pelletized and dried at 80°C. Test specimens were then prepared as in Examples 4-6 and tested (in comparison with controls) for Izod impact strength. The compositional and test data are given in Table IV. The compositions of Examples 19-22 showed no delamination, while severe delamination was observed in the controls.

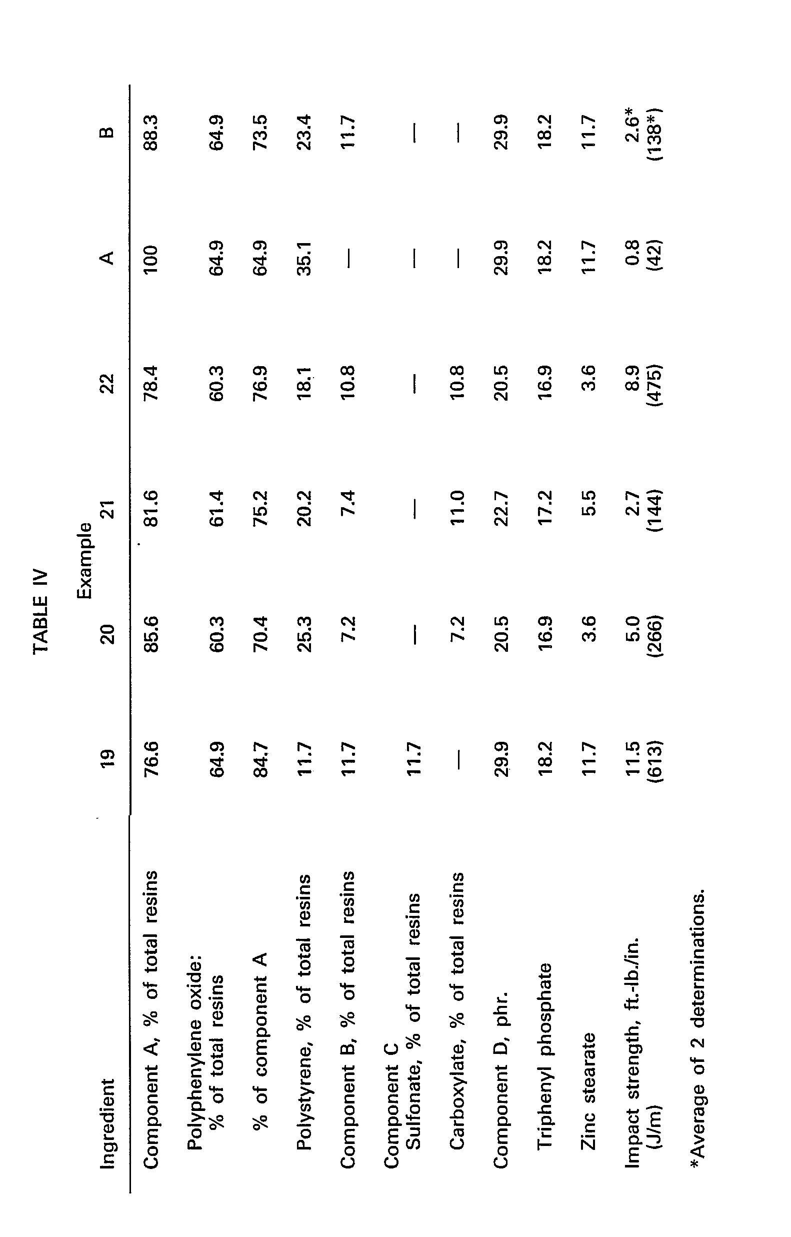

In general, Table IV shows the same trends as Tables I―III. The apparent similarity in properties of the composition of Example 21 to Control B is reflected only in impact strength since, as previously noted, the latter was substantially inferior to the former with respect to delamination.

### Example 23

Following the procedure of Examples 4-6, a polymer blend was prepared comprising the following:
Component A: 51.8 parts of 2,2'-6,6'-tetramethylbisphenol A polycarbonate having a molecular weight of 15,500 and an intrinsic viscosity in chloroform at 25°C of 0.53 dl/g, and 27.0 parts of "Monsanto Lustrex HH-101@".
Component B: 10.6 parts of the zinc salt of a sulfonated EPDM rubber having a degree of ionomerization of about 0.15% and prepared from "Vistalon 3708@", a commercially available EPDM rubber available from Exxon Corporation which has a molecular weight of about 50,000.
Component C: 10.6 parts of the sulfonated styrene homopolymer of Example 3.
Component D: 7.1 phr. of triphenyl phosphate; 10.6 phr. of zinc stearate.

### Examples 24-25

In component A, the polyphenylene oxide and polystyrene were those of Examples 4-6, and component B was "Uniroyal IE-2590®". The resins used as component C were the styrene-sodium acrylate polymer of Examples 19-22 and its acidic (i.e., non-neutralized) counterpart.

The compositions were prepared as in Example 19-22 and test specimens were evaluated for delamination, in comparison with control. The compositional and test data are given in Table V.

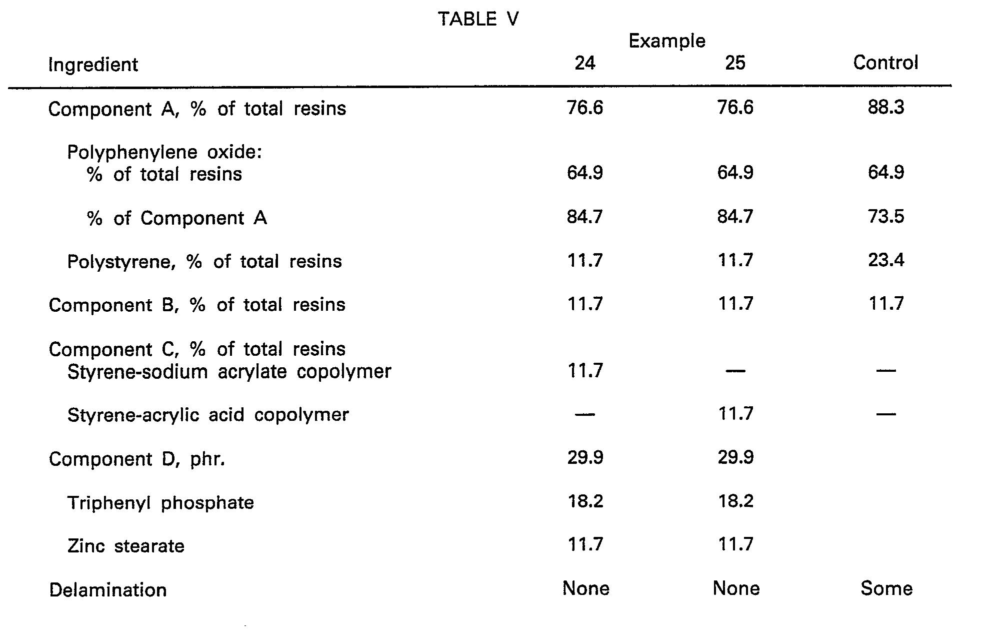

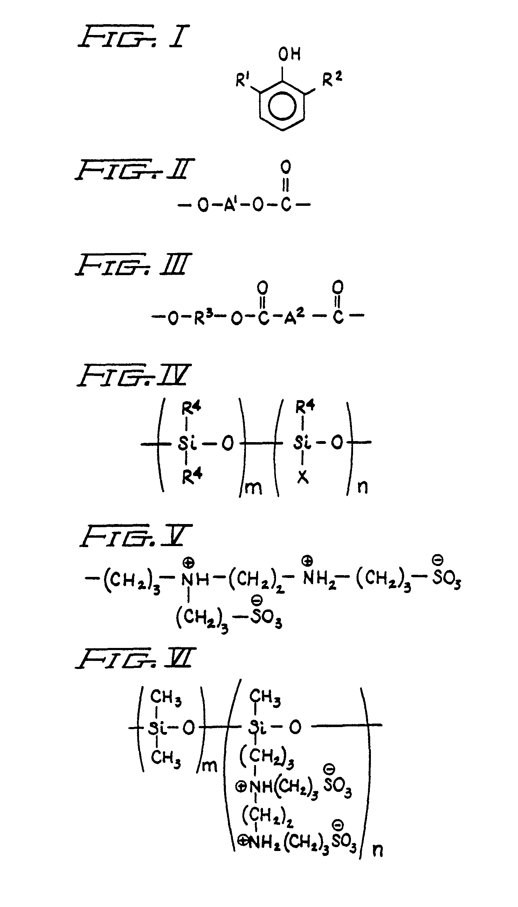

## Claims

1. A polymer composition comprising:
(A) 50-85% of weight of at least one non-ionic aromatic polymer;
(B) 2-20% by weight of at least one elastomer containing highly polar ionic substituents, characterized in that it further comprises;
(C) 2-40% by weight of at least one substituted aromatic polymer, the substituents thereon being highly polar ionic substituents, based on the total weight of components A, B and C.

2. A composition according to claim 1 wherein component A is at least one condensation polymer selected from the group consisting of polyphenylene oxides, aromatic polycarbonates, aromatic polyimides, and aromatic polyesters substantially free from ethylenic unsaturation, or a mixture thereof with at least one addition polymer.

3. A composition according to claim 2 wherein the condensation polymer portion of component A is at least one polyphenylene oxide having a number average molecular weight of 5,000-40,000.

4. A composition according to claim 3 wherein said polyphenylene oxide is a poly(2,6-dimethyl-1,4-phenylene oxide).

5. A composition according to claim 4 wherein component A consists entirely of said polyphenylene oxide.

6. A composition according to claim 4 wherein component A is a mixture of said polyphenylene oxide with a styrene homopolymer having a number average molecular weight of 50,000-250,000, said mixture containing 35-90% by weight polyphenylene oxide.

7. A composition according to claim 2 wherein the substituents on component B are selected from the group consisting of sulfonic acid, carboxylic acid, phosphorus acid and quaternary ammonium base substituents and salts thereof.

8. A composition according to claim 7 wherein the substituents on component B are sulfonate or carboxylate substituents.

9. A composition according to claim 8 wherein component B is substantially free from aromatic moieties and its degree of ionomerization is 0.1-10%.

10. A composition according to claim 9 wherein component B has a molecular weight of 10,000-250,000 and a glass transition temperature no higher than about -20°C.

11. A composition according to claim 10 wherein component B is entirely free from aromatic moieties and the degree of ionomerization thereof is 0.25-5%.

12. A composition according to claim 11 wherein the substituents on component B are zinc or sodium sulfonate substituents.

13. A composition according to claim 12 wherein component B is a sulfonated ethylene-propylene-diene rubber wherein the diene is non-conjugated (EPDM rubber).

14. A composition according to claim 13 wherein the substituents on component B are zinc sulfonate substituents.

15. A composition according to claim 11 wherein the substituents on component B are carboxylate substituents.

16. A composition according to claim 15 wherein component B is a copolymer of butadiene, acrylonitrile and acrylic acid which has been at least partially neutralized with sodium hydroxide.

17. A composition according to claim 2 wherein component C is an ionomeric derivative of at least one constituent of component A.

18. A composition according to claim 17 wherein component C has a degree of ionomerization of 0.5-10% and the substituents thereon are selected from the group consisting of sulfonic acid, carboxylic acid, phosphorus acid and quaternary ammonium base substituents and salts thereof.

19. A composition according to claim 18 wherein the substituents on component C are sulfonate substituents.

20. A composition according to claim 19 wherein the substituents on component C are zinc or sodium sulfonate substituents.

21. A composition according to claim 20 wherein component C is a sulfonated polyphenylene oxide.

22. A composition according to claim 21 wherein component C is a sulfonated poly(2,6-dimethyl-1,4-phenylene oxide) having a degree of ionomerization of 1-3%.

23. A composition according to claim 22 wherein the substituents on component C are zinc sulfonate substituents.

24. A composition according to claim 20 wherein component C is a sulfonated styrene homopolymer.

25. A composition according to claim 24 wherein the substituents on component C are zinc sulfonate substituents.

26. A composition according to claim 18 wherein the substituents on component C are carboxylate substituents.

27. A composition according to claim 26 wherein component C is a styrene-sodium acrylate copolymer.

28. A composition according to claim 27 wherein the degree of ionomerization of component C is 1-5%.

29. A composition according to any one of the preceding claims which comprises 70-85% by weight of component A, 5-15% by weight of component B and 2-20% by weight of component C.

30. A composition according to claim 1, 2, 7 or 17 which additionally comprises (D) 5-35 parts by weight per hundred parts by weight of resinous components of at least one plasticizer, said plasticizer being a polar material melting at least 50°C below the processing temperature of the resinous components of the composition.

31. A composition according to claim 30 wherein the plasticizer contains at least one of oxygen, phosphorus and nitrogen atoms or releases a small polar molecular at elevated temperatures.

32. A composition according to claim 3 or 21 which additionally comprises (D) 5-35 parts by weight per hundred parts by weight of resinous components of at least one plasticizer, said plasticizer being a polar material melting no higher than about 190°C.

33. A composition according to claim 32 wherein the plasticizer is at least one of triaryl phosphates and metal salts of fatty acids.

34. A composition according to claim 33 wherein component D is a combination of 40-70% by weight triaryl phosphate with the balance being zinc salts of said fatty acids.

35. A composition according to claim 34 wherein the zinc salt is zinc stearate.

36. A polymer composition comprising:
(A) 70-85% by weight of a blend of poly(2,6-dimethyl-1,4-phenylene) oxide and a styrene homopolymer, said blend comprising 50-80% by weight poly(2,6-dimethyl-1,4-phenylene) oxide;
(B) 5-15% by weight of an elastomer having a degree of ionomerization of 0.25-5% and selected from the group consisting of zinc salts of sulfonated EPDM rubbers and partially neutralized butadiene- acrylonitrile-acrylic acid terpolymers, characterized in that it further comprises:
(C) 2-20% by weight of a compatibilizer having a degree of ionomerization of 1-5% and selected from the group consisting of zinc salts of sulfonated polystyrenes and styrene-sodium acrylate copolymers; and
(D) 20-35 parts by weight, per 100 parts of resinous components, of a triphenyl phosphate-zinc stearate plasticizer mixture comprising 40-70% by weight triphenyl phosphate.

## Patentansprüche

1. Polymerzusammensetzung enthaltend
(A) 50-85 Gew.-% von wenigstens einem nicht-ionischen aromatischen Polymeren;
(B) 2-20 Gew.-% von wenigstens einem Elastomeren enthaltend hochpolare ionische Substituenten, dadurch gekennzeichnet, daß sie weiterhin enthält
(C) 2-40 Gew.-% von wenigstens einem substituierten aromatischen Polymeren, wobei die Substituenten desselben hochpolare ionische Substituenten sind, bezogen auf das Gesamtgewicht der Komponenten (A), (B) und (C).

2. Zusammensetzung nach Anspruch 1, worin die Komponente (A) wenigstens ein Kondensationspolymeres ausgewählt aus der Gruppe bestehend aus Polyphenylenoxiden, aromatischen Polycarbonaten, aromatischen Polyimiden und aromatischen Polyestern, die im wesentlichen frei von äthylenischer Ungesättigtheit sind oder eine Mischung derselben mit wenigstens einem Additionspolymeren enthält.

3. Zusammensetzung nach Anspruch 2, worin der Kondensationspolymeranteil der Komponente (A) wenigstens ein Polyphenylenoxid mit einem zahlengemittelten Molekulargewicht von 5,000 bis 40,000 ist.

4. Zusammensetzung nach Anspruch 3, worin das Polyphenylenoxid ein Poly(2,6-dimethyl-1,4-phenylenoxid) ist.

5. Zusammensetzung nach Anspruch 4, worin die Komponente (A) vollständig aus dem besagten Polyphenylenoxid besteht.

6. Zusammensetzung nach Anspruch 4, worin die Komponente (A) eine Mischung des Polyphenylenoxids mit einem Styrolhomopolymer ist, die ein zahlengemitteltes Molekulargewicht von 50,000 bis 250,000 aufweist und die Mischung 35-90 Gew.-% Polyphenylenoxid enthält.

7. Zusammensetzung nach Anspruch 2, worin die Substituenten der Komponente (B) ausgewählt sind aus der Gruppe bestehend aus Sulfonsäure-, Carbonsäure-, Phosphorsäure- und quatern, Ammoniumbase-Substituenten und Salzen derselben.

8. Zusammensetzung nach Anspruch 7, worin die Substituenten der Komponente (B) Sulfonat- oder Carboxylat-Substituenten sind.

9. Zusammensetzung nach Anspruch 8, worin die Komponente (B) im wesentlichen frei ist von aromatischen Anteilen und ihr lonomerisationsgrad 0,1 bis 10% beträgt.

10. Zusammensetzung nach Anspruch 9, worin die Komponente (B) ein Molekulargewicht von 10,000 bis 250,000 aufweist und eine Glasübergangstemperatur von nicht mehr als etwa minus 20°C besitzt.

11. Zusammensetzung nach Anspruch 10, worin die Komponente (B) vollständig frei ist von aromatischen Anteilen und der lonomerisationsgrad derselben 0,25-5% beträgt.

12. Zusammensetzung nach Anspruch 11, worin die Substituenten an der Komponente (B) Zink- oder Natriumsulfonat-Substituenten sind.

13. Zusammensetzung nach Anspruch 12, worin die Komponente (B) ein sulfonierter Äthylen-Propylen-Dien-Gummi ist, worin das Dien ein nicht-konjugierter (EPDM) Gummi ist.

14. Zusammensetzung nach Anspruch 13, worin die Substituenten an der Komponente (B) Zinksulfonat-Substituenten sind.

15. Zusammensetzung nach Anspruch 11, worin die Substituenten an der Komponente (B) Carbonsäure-Substituenten sind.

16. Zusammensetzung nach Anspruch 15, worin die Komponente (B) ein Copolymer des Butadiens, des Acrylnitrils und der Acrylsäure ist, welches wenigstens teilweise mit Natriumhydroxid neutralisiert ist.

17. Zusammensetzung nach Anspruch 2, worin die Komponente (C) ein ionomeres Derivat von wenistens einem Bestandteil der Komponente (A) ist.

18. Zusammensetzung nach Anspruch 17, worin die Komponente (C) einen lonomerisationsgrad von 0,5 bis 10% aufweist, und die Substituenten derselben ausgewählt sind aus der Gruppe bestehend aus Sulfonsäure-, Carbonsäure-, Phosphorsäure- und quatern. Ammoniumbasen-Substituenten und Salzen derselben.

19. Zusammensetzung nach Anspruch 18, worin die Substituenten der Komponente (C) Sulfonat-Substituenten sind.

20. Zusammensetzung nach Anspruch 19, worin die Substituenten der Komponente (C) Zink- oder Natriumsulfonat-Substituenten sind.

21. Zusammensetzung nach Anspruch 20, worin die Komponente (C) ein sulfoniertes Polyphenylenoxid ist.

22. Zusammensetzung nach Anspruch 21, worin die Komponente (C) ein sulfoniertes Poly(2,6-dimethyl-1,4-phenylenoxid) mit einem lonomerisationsgrad von 1 bis 3% ist.

23. Zusammensetzung nach Anspruch 22, worin die Substituenten an der Komponente (C) Zinkfulfonat-Substituenten sind.

24. Zusammensetzung nach Anspruch 20, worin die Komponente (C) ein sulfoniertes Styrolhomopolymer ist.

25. Zusammensetzung nach Anspruch 24, worin die Substituenten an der Komponente (C) Zinksulfonat-Substituenten sind.

26. Zusammensetzung nach Anspruch 18, worin die Substituenten an der Komponente (C) Carboxylat-Substituenten sind.

27. Zusammensetzung nach Anspruch 26, worin die Komponente (C) ein Styrol-Natriumacrylat-Copolymer ist.

28. Zusammensetzung nach Anspruch 27, worin der lonomerisationsgrad der Komponente (C) 1 bis 5% beträgt.

29. Zusammensetzung nach einem der vorausgehenden Ansprüche, die 70-85 Gew.-% der Komponente (A), 5-15 Gew.-% der Komponente (B) und 2-20 Gew.-% der Komponente (C) enthält.

30. Zusammensetzung nach den Ansprüchen 1, 2, 7 oder 17, die zusätzlich enthält:
(D) 5-35 Gew.-Teile pro 100 Gew.-Teile der harzartigen Komponenten von wenigstens einem Weichmacher, wobei der Weichmacher ein polares Material mit einem Schmelzpunkt von wenigstens 50°C unter der Verarbeitungstemperatur der harzartigen Komponenten der Zusammensetzung ist.

31. Zusammensetzung nach Anspruch 30, worin der Weichmacher wenigstens ein Sauerstoff-, Phosphor- und Stickstoffatom aufweist oder bei erhöhten Temperaturen ein kleines polares Molekül freisetzt.

32. Zusammensetzung nach Anspruch 3 oder 21, die zusätzlich enthält:
(D) 5-35 Gew.-Teile pro 100 Gew.-Teile der harzartigen Komponenten von wenigstens einem Weichmacher, wobei der Weichmacher ein polares Material ist, welches nicht höher als bei etwa 190°C schmilzt.

33. Zusammensetzung nach Anspruch 32, worin der Weichmacher wenigstens einer aus Triarylphosphaten und Metallsalzen von Fettsäuren ist.

34. Zusammensetzung nach Anspruch 33, worin die Komponente (D) eine Kombination ist aus 40-70 Gew.-% Triarylphosphat und der Rest aus Zinksalzen von Fettsäuren besteht.

35. Zusammensetzung nach Anspruch 34, worin das Zinksalz Zinkstearat ist.

36. Polymer-Zusammensetzung enthaltend:
(A) 70-85 Gew.-% einer Mischung aus Poly(2,6-dimethyl-1,4-phenylenoxid) und einem Styrolhomopolymer, wobei diese Mischung 50-80 Gew.-% Poly(2,6-dimethyl-1,4-phenylenoxid) aufweist;
(B) 5-15 Gew.-% eines Elastomeren mit einem lonomerisationsgrad von 0,25 bis 5% und ausgewählt aus der Gruppe bestehend aus Zinksalzen von sulfonierten EPDM-Gummis und teilweise neutralisierten Butadien-Acrylnitril-Acrylsäure-Terpolymeren, dadurch gekennzeichnet, daß sie weiterhin enthält:
(C) 2-20 Gew.-% eines Compatibilisierungsmittels mit einem lonomerisierungsgrad von 1 bis 5% ausgewählt aus der Gruppe bestehend aus Zinksalzen von sulfonierten Polystyrolen und Styrol-Natriumacrylat-Copolymeren und
(D) 20-35 Gew.-Teilen pro 100 Teile der harzartigen Komponenten aus einer Triphenylphosphat-Zinkstearat-Plastifizierungsmischung enthaltend 40-70 Gew.-% Triphenylphosphat.

## Revendications

1. Composition de polymères comprenant:
(A) de 50 à 85% en poids d'au moins un polymère aromatique non ionique.
(B) de 2 à 20% en poids d'au moins un élastomère contenant des substituants ioniques fortement polaries; caractérisée en ce qu'elles comprennent en outre;
(C) de 2 à 40% en poids d'au moins un polymère aromatique substitué, les substituants présents sur celui-ci étant des substituants ioniques fortement polaires, par rapport au poids total des composants A, B et C.

2. Composition suivant la revendication 1, dans laquelle le composant A comprend au moins un polymère de condensation choisi parmi le groupe consistant en polyoxyphénylènes, polycarbonates aromatiques, polyimides aromatiques et en polyesters aromatiques à peu près exempts d'insaturation éthylénique, ou un mélange de ceux-ci avec au moins un polymère d'addition.

3. Composition suivant la revendication 2, dans laquelle le polymère de condensation du composant A, comprend au moins un polyoxyphénylène ayant un poids moléculaire moyen en nombre de 5,000 à 40,000.

4. Composition suivant la revendication 3, dans laquelle ledit polyoxyphénylène est un poly(oxy-2,6-diméthyl-1,4-phénylène).

5. Composition suivant la revendication 4, dans laquelle le composant A consiste entièrement en ledit polyoxyphénylène.

6. Composition suivant la revendication 4, dans laquelle le composant A est un mélange dudit polyoxyphénylène avec un homopolymère de styrène ayant un poids moléculaire moyen en nombre de 50,000 à 250,000, ledit mélange contenant de 35 à 90% de polyoxyphénylène.

7. Composition suivant la revendication 2, dans laquelle les substituants du composant B, sont choisis parmi les substituants à groupe acide sulfonique, acide carboxylique, acide phosphoré et de type base d'ammonium quaternaire, et leurs sels.

8. Composition suivant la revendication 7, dans laquelle les substituants du composant B, sont des substituants de type sulfonate ou carboxylate.

9. Composition suivant la revendication 8, dans laquelle le composant B est à peu près exempt des groupes aromatiques et son degré d'ionomérisation est de 0,1 à 10%.

10. Composition suivant la revendication 9, dans lequel le composant B a un poids moléculaire de 10,000 à 250,000 et une température de transition vitreuse qui n'est pas supérieure à environ -20°C.

11. Composition suivant la revendication 10, dans laquelle le composant B est entièrement exempt des groupes aromatiques et son degré d'ionomérisation est de 0,5 à 5%.

12. Composition suivant la revendication 11, dans laquelle les substituants du composé B, sont des substituants de type sulfonate de zinc ou de sodium.

13. Composition suivant la revendication 12, dans laquelle le composant B est un caoutchouc de type éthylène-propylène-diène sulfoné dans lequel le diène n'est pas conjugué (caoutchouc de type EPDM).

14. Composition suivant la revendication 13, dans laquelle les substituants du composant B sont des substituants de type sulfonate de zinc.

15. Composition suivant la revendication 11, dans laquelle les substituants des composants B, sont des substituants de type carboxylate.

16. Composition suivant la revendication 15, dans laquelle le composant B est un copolymère de butadiène, d'acrylonitrile et d'acide acrylique qui a été au moins partiellement neutralisé avec de l'hydroxyde de sodium.

17. Composition suivant la revendication 2, dans laquelle le composant C est un dérivé ionomérique d'au moins un constituant du composant A.

18. Composition suivant la revendication 17, dans laquelle le composant C a un degré d'ionomérisation de 0,5 à 10% et dans laquelle les substituants présents dans celui-ci, sont choisis parmi des substituants à groupe acide sulfonique, acide carboxylique, acide phosphoré et de type base d'ammonium quaternaire, et leurs sels.

19. Composition suivant la revendication 18, dans laquelle les substituants du composant C sont des substituants de type sulfonate.

20. Composition suivant la revendication 19, dans laquelle les substituants du composant C sont des substituants de type sulfonate de zinc.

21. Composition suivant la revendication 20, dans laquelle le composant C est un polyoxyphénylène sulfoné.

22. Composition suivant la revendication 21, dans laquelle le composant C est un poly(oxy-2,6-diméthyl-1,4-phénylène) sulfoné ayant un degré d'ionomérisation de 1 à 3%.

23. Composition suivant la revendication 22, dans laquelle les substituants du composant C, sont des substituants de type de sulfonate de zinc.

24. Composition suivant la revendication 20, dans laquelle le composant C est un homopolymère de styrène sulfoné.

25. Composition suivant la revendication 24, dans laquelle les substituants du composant C, sont des substituants de type sulfonate de zinc.

26. Composition suivant la revendication 18, dans laquelle les substituants du composant C sont des substituants de type carboxylate.

27. Composition suivant la revendication 26, dans laquelle le composant C est un copolymère d'acrylate de sodium et de styrène.

28. Composition suivant la revendication 27, dans laquelle le degré d'ionomérisation du composant C est de 1 à 5%.

29. Composition suivant l'une quelconque des revendications précédentes, comprenant de 70 à 85% en poids du composant A, de 5 à 15% en poids du composant B et de 2 à 20% en poids du composant C.

30. Composition suivant la revendication 1, 2, 7 ou 17, comprenant en outre (D) de 5 à 35 parties en poids d'au moins un plastifiant pour 100 parties en poids du composant résineux, ledit plastifiant étant un produit polaire fondant à au moins 50°C en-dessous de la température de mise en oeuvre des composants résineux de la composition.

31. Composition suivant la revendication 30, dans laquelle le plastifiant contient au moins un atome d'oxygène, de phosphore et d'azote, ou il libère une petite molécule polaire à des températures élevées.

32. Composition suivant la revendication 3 ou 21, comprenant en outre (D) de 5 à 35 parties en poids d'au moins un plastifiant pour 100 parties en poids des composants résineux, ledit plastifiant étant un produit polaire ne fondant pas à plus d'environ 190°C.

33. Composition suivant la revendication 32, dans laquelle le plastifiant comprend au moins un produit choisi par un phosphate triarylique et un sel métallique d'un acide gras.

34. Composition suivant la revendication 33, dans laquelle la composant D est une combinaison de 40 à 70% en poids d'un phosphate triarylique, le reste étant des sels de zinc desdits acides gras.

35. Composition suivant la revendication 34, dans laquelle le sel de zinc est du stéarate de zinc.

36. Composition de polymères comprenant:
(A) de 70 à 85% en poids d'un mélange de poly(oxy-2,6-diméthyl-1,4-phénylène) et d'un homopolymère de styrène, ledit mélange comprenant de 50 à 80% en poids de poly(oxy-2,6-diméthyl-1,4- phénylène);
(B) de 5 à 15% en poids d'un élastomère ayant un degré d'ionomérisation de 0,25 à 5%, choisi parmi les sels de zinc des caoutchoucs sulfonés de type EPDM et des terpolymères d'acide acrylique, d'acrylonitrile et de butadiène partiellement neutralisés, caractérisée en ce qu'elle comprend en outre;
(C) de 2 à 20% en poids d'un agent de compatibilité ayant un degré d'ionomérisation de 1 à 5%, choisi parmi les sels de zinc des polystyrènes sulfonés et les copolymères d'acrylate de sodium et de styrène; et
(D) de 20 à 35 parties en poids pour 100 parties en poids des composants résineux, d'un mélange de plastifiants contenant du stéarate de zinc et du phosphate de triphényle, comprenant de 40 à 70% en poids du phosphate de triphényle.
